# EUROPÄISCHE PATENTSCHRIFT

(11) **EP 1 168 146 B1**
(45) Veröffentlichungstag und Bekanntmachung des Hinweises auf die Patenterteilung: **02.05.2007**
(21) Anmeldenummer: 01115210.5
(22) Anmeldetag: 22.06.2001
(51) Int. Cl.: G06F 3/023

(54) **Verfahren zum Einstellen einer Zieladresse**
Methdod for establishing a destination address
Procédé pour établir une adresse de destination

(30) Priorität: 27.06.2000 DE 10031174
(43) Veröffentlichungstag der Anmeldung: 02.01.2002
(73) Patentinhaber: SIEMENS AKTIENGESELLSCHAFT, 80333 München (DE)
(72) Erfinder: Berz, Arno, 76287 Rheinstetten (DE)

(56) Entgegenhaltungen:
- US-A- 5 867 106
- US-A- 5 889 866
- US-A- 6 072 468

## Beschreibung

Die Erfindung betrifft ein Verfahren zum Einstellen einer Zieladresse, über welche Daten von einer Tastatur zu einer CPU-Einheit drahtlos übertragbar sind. Darüber hinaus betrifft die Erfindung einen Rechner, welcher zur Durchführung des Verfahrens geeignet ist, und eine Tastatur für einen derartigen Rechner.

Um zu verhindern, dass Daten, welche unidirektional von einer Tastatur zu einer CPU-Einheit eines Rechners drahtlos übertragbar sind, andere Rechner störend beeinflussen, wird gewöhnlich dieser Tastatur und der zu dieser Tastatur gehörigen CPU-Einheit ein Kanal eingestellt, über den die Daten übertragen werden. Zur Einstellung des Kanals sind dazu Codierschalter auf der Tastatur und auf der CPU-Einheit vorgesehen.

Aus der Patentschrift US 6072468 ist bereits ein Verfahren zur drahtlosen sicheren Kommunikation zwischen zwei Vorrichtungen bekannt: Vor dem Sendeschritt werden erst automatisch sowohl ein Adresskennzeichen als auch ein Verschlüsselungkennwort ausgetauscht.

Der vorliegenden Erfindung liegt die Aufgabe zugrunde, ein Verfahren der eingangs genannten Art anzugeben, das die Einstellung einer Zieladresse vereinfacht. Darüber hinaus ist ein Rechner, welcher zur Durchführung des Verfahrens geeignet ist, und ferner eine Tastatur für einen derartigen Rechner zu schaffen.

Im Hinblick auf das Verfahren wird die Aufgabe gelöst durch die im kennzeichnenden Teil des Anspruchs 1 angegebenen, im Hinblick auf den Rechner durch die im kennzeichnenden Teil des Anspruchs 4 angegebenen Maßnahmen. Eine für einen derartigen Rechner geeignete Tastatur weist die im Anspruch 7 angegebenen Maßnahmen auf.

Eine einfache Einstellung der Konfigurationsbetriebsart wird dadurch ermöglicht, dass die Tastatur durch Betätigen einer Taste oder einer Tastenkombination in die Tastatur-Konfigurationsbetriebsart schaltbar ist und dass die CPU-Einheit in die CPU-Konfigurationsbetriebsart durch Betätigen eines Schalters der CPU-Einheit oder durch Booten der CPU-Einheit oder durch Empfang eines durch die Tastatur gesendeten Konfigurationscodes schaltbar ist.

Um die zu übertragenden Daten vor unberechtigtem "Mithören" zu sichern, ist der in die Tastatur eingebbare und von der CPU-Einheit erzeugte Code sowohl zum Verschlüsseln der durch die Tastatur zu übertragenden Daten als auch zum Entschlüsseln der übertragenen Daten in der CPU-Einheit vorgesehen.

Anhand der Zeichnung, in der ein Ausführungsbeispiel der Erfindung veranschaulicht ist, werden im Folgenden die Erfindung, deren Ausgestaltungen sowie Vorteile näher erläutert.

### Es zeigen:

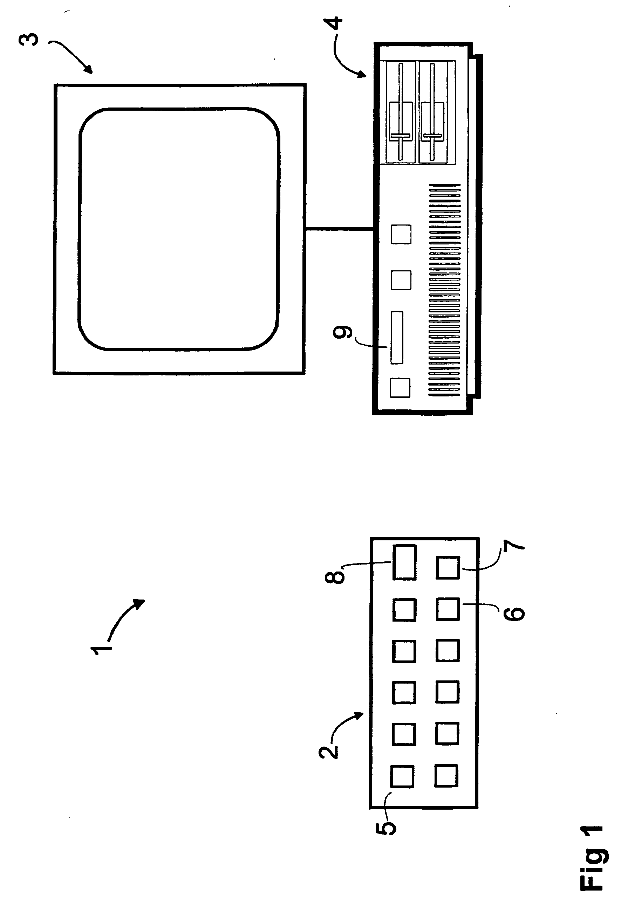

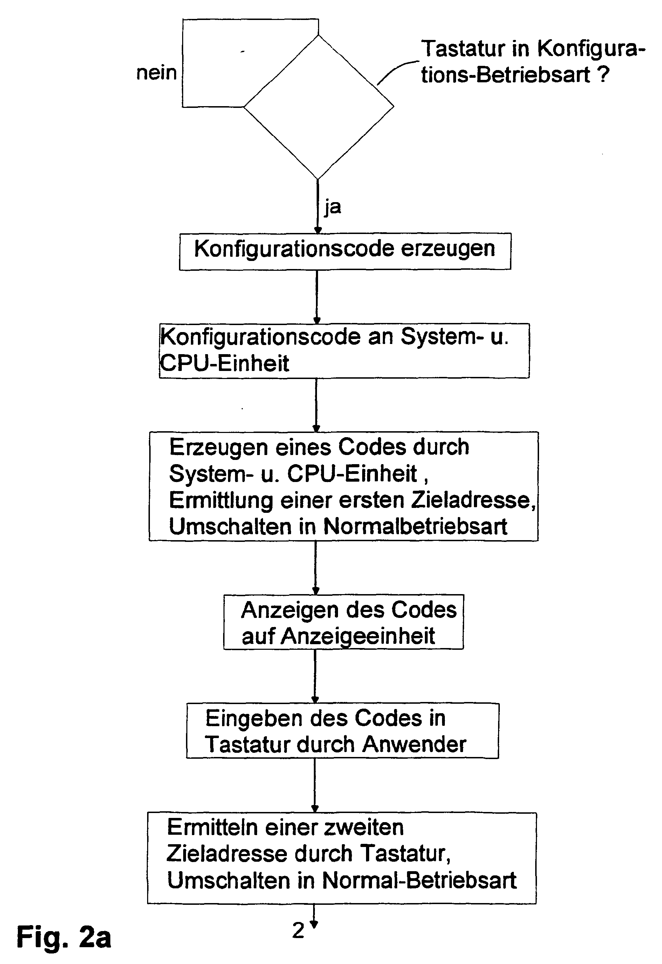

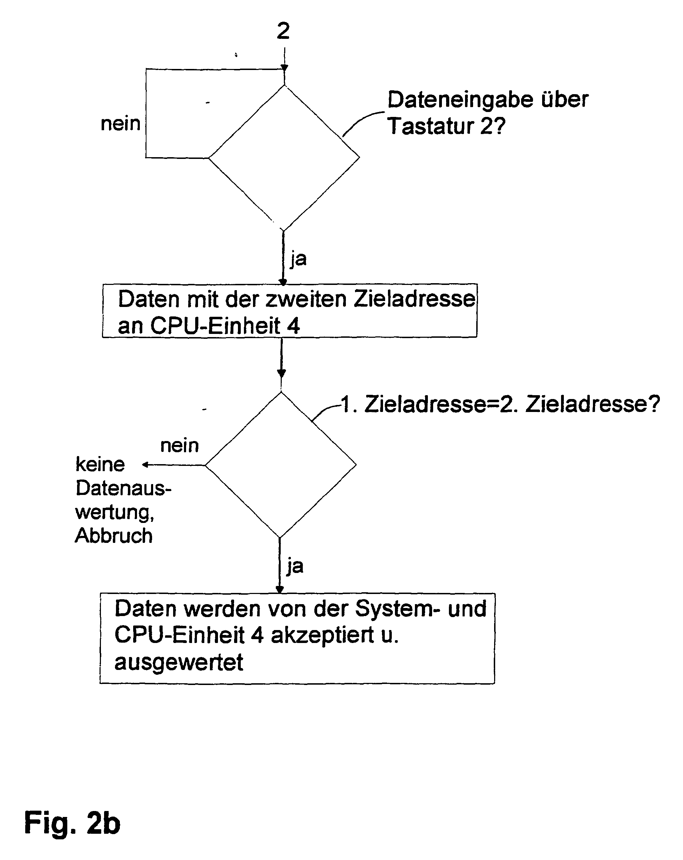

Figur 1 eine schematische Darstellung eines Rechners und Figur 2 ein Fluss-Diagramm.

In Figur 1 ist mit 1 ein Rechner bezeichnet, der eine Tastatur 2, eine Anzeigeeinheit 3 und eine System- und CPU-Einheit 4 umfasst. Bestandteile der System- und CPU-Einheit 4 sind z. B. Baugruppen in Form von CPU- und/oder Kommunikations-und/oder Grafik- und/oder Speicherbaugruppen sowie Massenspeicherlaufwerke mit entsprechenden Laufwerkssteuerungen. Es ist angenommen, dass nach dem Booten der System- und CPU-Einheit 4 und nach dem Einschalten der Tastatur 2 sowohl die System- und CPU-Einheit 4 als auch die Tastatur in eine Konfigurationsbetriebsart zu schalten ist. In dieser Betriebsart ist eine Zieladresse einstellbar, über welche die Tastatur 2 der System- und CPU-Einheit 4 Daten übermittelt. Dazu betätigt ein Anwender eine Reset-Taste 5, wodurch die Tastatur-Konfigurationsbetriebsart eingeschaltet ist. Anstatt der Reset-Taste zur Einstellung der Tastatur-Konfigurationsbetriebsart können auch andere Tasten vorgesehen werden, z. B. eine hier nicht dargestellte Konfigurations-Einstelltaste oder eine Tastenkombination aus Taste 6 und 7. Eine derart eingestellte Tastatur-Betriebsart bewirkt, dass einerseits die Tastatur 2 für eine Code-Eingabe bereit ist und dass andererseits die Tastatur über einen Tastatur-Sender 8 einen Konfigurationscode ohne eine Zieladresse aussendet. Die empfangsbereite System- und CPU-Einheit 4 empfängt über einen Empfänger 9 diesen Konfigurationscode, wodurch ein Software-Baustein gestartet wird, der zunächst einen Code erzeugt. Aus diesem Code ermittelt der Software-Baustein eine erste Zieladresse und zeigt ferner diesen Code auf der Anzeigeeinheit 3 an.
Dieser auf der Anzeigeeinheit 3 dargestellte Code gibt der Anwender in die Tastatur 2 ein, aus welchem ein in der Tastatur 2 hinterlegter Software-Baustein eine zweite Zieladresse ermittelt. Der Programmteil des in der Tastatur hinterlegten Software-Bausteins, der aus dem Code die Zieladresse ermittelt, entspricht im Hinblick auf die Generierung dieser Zieladresse demjenigen Teil des in der System- und CPU-Einheit 4 hinterlegten Software-Bausteins, der ebenfalls aus dem Code eine Zieladresse ermittelt. Dabei ist es selbstverständlich möglich, dass die Software-Bausteine zum Erzeugen der Zieladressen sich unterschiedlicher Programmsprachen bedienen. Die in die Tastatur eingebbare und zur System- und CPU-Einheit 4 übertragbaren Daten werden nun mit der zweiten Zieladresse übertragen, wobei diese Daten nur dann von der System- und CPU-Einheit 4 akzeptiert und weiterverarbeitet werden, falls diese zweite Zieladresse der ersten Zieladresse entspricht, was darauf hinweist, dass die Zieladressen aus dem gleichen Code erzeugt wurden.

Um die zu übertragenden Daten gegen unberechtigtes "Mithören" zu sichern, ist vorgesehen, die Daten vor der Übertragung an die System- und CPU-Einheit 4 zu verschlüsseln. Dazu ist der in der Tastatur hinterlegte Software-Baustein derart ausgebildet, um die Daten mit dem durch den Anwender eingegebenen Code zu verschlüsseln. Ferner ist der Software-Baustein der System- und CPU-Einheit 4 derart ausgebildet, die empfangenen Daten mit dem Code zu entschlüsseln, wobei zur Ver- und Entschlüsselung der Daten an sich bekannte Crypto-Algorithmen einsetzbar sind.

In Figur 2, in welcher ein Fluss-Diagramm dargestellt ist, sind die wesentlichen Verfahrensabläufe zur Einstellung einer Zieladresse gezeigt.

## Patentansprüche

1. Verfahren zum Einstellen einer Zieladresse, über welche Daten von einer Tastatur (2) zu einer CPU-Einheit (4) drahtlos übertragbar sind, **dadurch gekennzeichnet,**
- **dass** in einer Konfigurationsbetriebsart der CPU-Einheit (4), in welcher die CPU-Einheit (4) einen Code erzeugt, ein in der CPU-Einheit (4) hinterlegter Software-Baustein eine erste Zieladresse ermittelt,
- **dass** dieser Code auf einer Anzeigeeinheit (3) dargestellt wird,
- **dass** in einer Tastatur-Konfigurationsbetriebsart, in welcher durch einen Anwender der auf der Anzeigeeinheit (3) dargestellte Code in die Tastatur (2) eingebbar ist, ein in der Tastatur (2) hinterlegter Software-Baustein eine zweite Zieladresse ermittelt, wobei in einer Normalbetriebsart die CPU-Einheit (4) von der Tastatur (2) zugeführte Daten nur dann weiterverarbeitet, falls die zugeführten Daten die zweite Zieladresse umfassen und diese zweite Zieladresse der ersten Zieladresse entspricht.

2. Verfahren nach Anspruch 1, **dadurch gekennzeichnet,**
- **dass** die Tastatur (2) durch Betätigen einer Taste oder einer Tastenkombination (6, 7) in die Tastatur-Konfigurationsbetriebsart schaltbar ist,
- **dass** die CPU-Einheit durch Betätigen eines Schalters der CPU-Einheit oder beim Booten der CPU-Einheit oder durch Empfang eines durch die Tastatur gesendeten Konfigurationscodes in die CPU-Konfigurationsbetriebsart schaltbar ist.

3. Verfahren nach Anspruch 1 oder 2, **dadurch gekennzeichnet,**
- **dass** der in die Tastatur (2) eingebbare Code zum Verschlüsseln der zu übertragenden Daten vorgesehen ist und
- **dass** der von der CPU-Einheit (4) erzeugte Code zum Entschlüsseln der der CPU-Einheit (4) übertragenen Daten vorgesehen ist.

4. Rechner mit einer CPU-Einheit (4), einer Anzeigeeinheit (3) und einer Tastatur (2), wobei Daten über eine Zieladresse von der Tastatur (2) zu der CPU-Einheit (4) übertragbar sind, **dadurch gekennzeichnet,**
- **dass** die CPU-Einheit (4) Mittel zum Einstellen einer Konfigurationsbetriebsart der CPU-Einheit (4) aufweist, in welcher die CPU-Einheit (4) einen Code erzeugt, aus dem ein in der CPU-Einheit (4) hinterlegter Software-Baustein eine erste Zieladresse ermittelt, wobei dieser Code auf der Anzeigeeinheit (3) darstellbar ist,
- **dass** die Tastatur Mittel zum Einstellen einer Tastatur-Konfigurationsbetriebsart aufweist, in welcher durch einen Anwender der auf der Anzeigeeinheit (3) dargestellte Code in die Tastatur (2) eingebbar ist, aus dem ein in der Tastatur (2) hinterlegter Software-Baustein eine zweite Zieladresse ermittelt, wobei in einer Normalbetriebsart die CPU-Einheit von (4) der Tastatur (2) zugeführte Daten nur dann weiterverarbeitet, falls die zugeführten Daten die zweite Zieladresse umfassen und diese zweite Zieladresse der ersten Zieladresse entspricht.

5. Rechner nach Anspruch 4, **dadurch gekennzeichnet,**
- **dass** die Tastatur (2) durch Betätigen einer Taste oder einer Tastenkombination (6, 7) in die Tastatur-Konfigurationsbetriebsart schaltbar ist,
- **dass** die CPU-Einheit durch Betätigen eines Schalters der CPU-Einheit oder beim Booten der CPU-Einheit (4) oder durch Empfang eines durch die Tastatur (2) gesendeten Konfigurationscodes in die CPU-Konfigurationsbetriebsart schaltbar ist.

6. Rechner nach Anspruch 4 oder 5, **dadurch gekennzeichnet,**
- **dass** der in die Tastatur eingebbare Code zum Verschlüsseln der zu übertragenden Daten durch den Software-Baustein der Tastatur (2) vorgesehen ist und
- **dass** der von der CPU-Einheit (4) erzeugte Code zum Entschlüsseln der der CPU-Einheit (4) übertragenen Daten durch den Software-Baustein der CPU-Einheit (4) vorgesehen ist.

7. Tastatur (2) für einen Rechner nach einem der Ansprüche 4 bis 6, **dadurch gekennzeichnet, dass** die Tastatur Mittel zum Einstellen einer Tastatur-Konfigurationsbetriebsart aufweist, in welcher durch einen Anwender ein auf einer Anzeigeeinheit (3) darstellbarer Code in die Tastatur (2) eingebbar ist, aus dem ein in der Tastatur hinterlegter Software-Baustein eine Zieladresse ermittelt, über welche Daten von der Tastatur (2) zu einer CPU-Einheit (4) eines Rechners drahtlos übertragbar sind.

8. Tastatur (2) nach Anspruch 7, **dadurch gekennzeichnet, dass** die Tastatur (2) durch Betätigen einer Taste oder einer Tastenkombination in die Tastatur-Konfigurationsbetriebsart schaltbar ist.

9. Tastatur (2) nach Anspruch 7, **dadurch gekennzeichnet, dass** der in die Tastatur (3) eingebbare Code zum Verschlüsseln der zu übertragenden Daten durch den Software-Baustein der Tastatur (2) vorgesehen ist.

## Claims

1. Method for establishing a destination address which can be used to wirelessly transmit data from a keyboard (2) to a CPU unit (4), **characterized**
- **in that,** in a configuration operating mode of the CPU unit (4) in which the CPU unit (4) generates a code, a software module stored in the CPU unit (4) determines a first destination address,
- **in that** this code is displayed on a display unit (3),
- **in that,** in a keyboard configuration operating mode in which a user can input the code displayed on the display unit (3) into the keyboard (2), a software module stored in the keyboard (2) determines a second destination address, the CPU unit (4) further processing data which are supplied by the keyboard (2) in a normal operating mode only if the supplied data comprise the second destination address and this second destination address corresponds to the first destination address.

2. Method according to Claim 1, **characterized**
- **in that** the keyboard (2) can be switched into the keyboard configuration operating mode by pressing a key or a combination of keys (6, 7),
- **in that** the CPU unit can be switched into the CPU configuration operating mode by operating a switch in the CPU unit or when booting up the CPU unit or by receiving a configuration code transmitted by the keyboard.

3. Method according to Claim 1 or 2, **characterized**
- **in that** the code which can be input into the keyboard (2) is provided for the purpose of encrypting the data to be transmitted, and
- **in that** the code generated by the CPU unit (4) is provided for the purpose of decrypting the data transmitted to the CPU unit (4).

4. Computer having a CPU unit (4), a display unit (3) and a keyboard (2), a destination address being able to be used to transmit data from the keyboard (2) to the CPU unit (4), **characterized**
- **in that** the CPU unit (4) has means for setting a configuration operating mode of the CPU unit (4) in which the CPU unit (4) generates a code, a software module stored in the CPU unit (4) using said code to determine a first destination address, and this code being able to be displayed on the display unit (3),
- **in that** the keyboard has means for setting a keyboard configuration operating mode in which a user can input the code displayed on the display unit (3) into the keyboard (2), a software module stored in the keyboard (2) using said code to determine a second destination address, and the CPU unit (4) further processing data which are supplied by the keyboard (2) in a normal operating mode only if the supplied data comprise the second destination address and this second destination address corresponds to the first destination address.

5. Computer according to Claim 4, **characterized**
- **in that** the keyboard (2) can be switched into the keyboard configuration operating mode by pressing a key or a combination of keys (6, 7),
- **in that** the CPU unit can be switched into the CPU configuration operating mode by operating a switch in the CPU unit or when booting up the CPU unit (4) or by receiving a configuration code transmitted by the keyboard (2).

6. Computer according to Claim 4 or 5, **characterized**
- **in that** the code which can be input into the keyboard is provided for the purpose of encrypting the data to be transmitted using the software module in the keyboard (2), and
- **in that** the code generated by the CPU unit (4) is provided for the purpose of decrypting the data transmitted to the CPU unit (4) using the software module in the CPU unit (4).

7. Keyboard (2) for a computer according to one of Claims 4 to 6, **characterized in that** the keyboard has means for setting a keyboard configuration operating mode in which a user can input a code, which can be displayed on a display unit (3), into the keyboard (2), a software module stored in the keyboard using said code to determine a destination address which can be used to wirelessly transmit data from the keyboard (2) to a CPU unit (4) of a computer.

8. Keyboard (2) according to Claim 7, **characterized in that** the keyboard (2) can be switched into the keyboard configuration operating mode by pressing a key or a combination of keys.

9. Keyboard (2) according to Claim 7, **characterized in that** the code which can be input into the keyboard (2) is provided for the purpose of encrypting the data to be transmitted using the software module in the keyboard (2).

## Revendications

1. Procédé de réglage d'une adresse de destination par l'intermédiaire de laquelle des données peuvent être transmises sans fil par un clavier (2) à une unité CPU (4), **caractérisé par le fait que**
- dans un mode de fonctionnement de configuration de l'unité CPU (4) dans lequel l'unité CPU (4) produit un code, un module logiciel enregistré dans l'unité CPU (4) détermine une première adresse de destination,
- ce code est présenté sur une unité d'affichage (3),
- dans un mode de fonctionnement de configuration de clavier dans lequel le code présenté sur l'unité d'affichage (3) peut être entré par un utilisateur dans le clavier (2), un module logiciel enregistré dans le clavier (2) détermine une deuxième adresse de destination, l'unité CPU (4) ne traitant dans un mode de fonctionnement normal des données envoyées par le clavier (2) que si les données envoyées comprennent la deuxième adresse de destination et si cette deuxième adresse de destination correspond à la première adresse de destination.

2. Procédé selon la revendication 1, **caractérisé par le fait que**
- par l'actionnement d'une touche ou d'une combinaison de touches (6, 7), le clavier (2) peut être commuté dans le mode de fonctionnement de configuration de clavier,
- par l'actionnement d'un interrupteur de l'unité CPU ou lors du démarrage de l'unité CPU ou lors de la réception d'un code de configuration émis par le clavier, l'unité CPU peut être commutée dans le mode de fonctionnement de configuration de CPU.

3. Procédé selon la revendication 1 ou 2, **caractérisé par le fait que**
- le code pouvant être entré dans le clavier (2) est prévu pour le cryptage des données à transmettre, et
- le code produit par l'unité CPU (4) est prévu pour le décryptage des données transmises dans l'unité CPU (4).

4. Ordinateur comportant une unité CPU (4), une unité d'affichage (3) et un clavier (2), des données pouvant être transmises par le clavier (2) à l'unité CPU (4) par l'intermédiaire d'une adresse de destination, **caractérisé par le fait que**
- l'unité CPU (4) comporte des moyens pour régler un mode de fonctionnement de configuration de l'unité CPU (4) dans lequel l'unité CPU (4) produit un code à partir duquel un module logiciel enregistré dans l'unité CPU (4) détermine une première adresse de destination, ce code pouvant être présenté sur l'unité d'affichage (3),
- le clavier comporte des moyens pour régler un mode de fonctionnement de configuration de clavier dans lequel le code présenté sur l'unité d'affichage (3) peut être entré par un utilisateur dans le clavier (2), code à partir duquel un module logiciel enregistré dans le clavier (2) détermine une deuxième adresse de destination, l'unité CPU (4) ne traitant dans un mode de fonctionnement normal des données envoyées par le clavier (2) que si les données envoyées comprennent la deuxième adresse de destination et si cette deuxième adresse de destination correspond à la première adresse de destination.

5. Ordinateur selon la revendication 4, **caractérisé par le fait que**
- par l'actionnement d'une touche ou d'une combinaison de touches (6, 7), le clavier (2) peut être commuté dans le mode de fonctionnement de configuration de clavier,
- par l'actionnement d'un interrupteur de l'unité CPU ou lors du démarrage de l'unité CPU (4) ou lors de la réception d'un code de configuration émis par le clavier (2), l'unité CPU peut être commutée dans le mode de fonctionnement de configuration de CPU.

6. Ordinateur selon la revendication 4 ou 5, **caractérisé par le fait que**
- le code pouvant être entré dans le clavier est prévu pour le cryptage des données à transmettre par le module logiciel du clavier (2), et
- le code produit par l'unité CPU (4) est prévu pour le décryptage des données transmises dans l'unité CPU (4) par le module logiciel de l'unité CPU (4).

7. Clavier (2) pour un ordinateur selon l'une des revendications 4 à 6, **caractérisé par le fait que** le clavier comporte des moyens pour régler un mode de fonctionnement de configuration de clavier dans lequel un code pouvant être présenté sur une unité d'affichage (3) peut être entré par un utilisateur dans le clavier (2), code à partir duquel un module logiciel enregistré dans le clavier détermine une adresse de destination par l'intermédiaire de laquelle des données peuvent être transmises sans fil par le clavier (2) à une unité CPU (4) d'un ordinateur.

8. Clavier (2) selon la revendication 7, **caractérisé par le fait que**, par l'actionnement d'une touche ou d'une combinaison de touches, le clavier (2) peut être commuté dans le mode de fonctionnement de configuration de clavier.

9. Clavier (2) selon la revendication 7, **caractérisé par le fait que** le code pouvant être entré dans le clavier (2) est prévu pour le cryptage des données à transmettre par le module logiciel du clavier (2).
